# EUROPÄISCHE PATENTANMELDUNG

(11) **EP 0 702 224 A2**
(43) Veröffentlichungstag der Anmeldung: **20.03.1996**
(21) Anmeldenummer: 95113877.5
(22) Anmeldetag: 05.09.1995
(51) Int. Cl.: G01M 3/28

(54) **Verfahren und Vorrichtung zur Dichtheitsprüfung von Rohrleitungen, insbesondere von Abwasserleitungen**

(30) Priorität: 13.09.1994 DE 4432473
(71) Anmelder: Rothenberger Werkzeuge-Maschinen GmbH, D-65799 Kelkheim/Ts. (DE)
(72) Erfinder: Trüschler, Jürgen, Dipl.-Ing., D-37247 Grossalmerode (DE)
(74) Vertreter: Zapfe, Hans, Dipl.-Ing.

(57) **Zusammenfassung**

Bei der Dichtheitsprüfung von verzweigten Rohrleitungen sind mit Wasser gefüllte, abgesperrte Rohrleitungsabschnitte (1, 2) gemeinsam mit einem Freispiegel-Vorratsbehälter (10) verbunden. Dessen Freispiegel (11) wird mit einem Prüfdruck beaufschlagt, und der Wasserverlust im Freispiegel-Behälter (10) wird während einer Prüfzeit gemessen. Zur Auswertung werden die Messung und die kennzeichnenden Daten der einzelnen Rohrleitungsabschnitte (1, 2) wie Länge, Innendurchmesser, Rohrbett-Tiefe und Werkstoff in einen Rechner (18) eingegeben und gespeichert. Die Summe aller Wasserverluste wird mit der Summe der zu den kennzeichnenden Daten gehörigen, bereits im Rechner vorhandenen Grenzwerte für die einzelnen Wasserverluste verglichen, und die besagten Summen werden angezeigt und/oder ausgedruckt. Der Rechner (18) besitzt eine Eingabevorrichtung zur Eingabe der kennzeichnenden Daten, je einen Datenspeicher für jeden vorgegebenen Grenzwert, und eine Vergleichseinrichtung zum Vergleich des Wasserlustes mit der Summe der Grenzwerte.

## Beschreibung

Die Erfindung betrifft ein Verfahren zur Dichtheitsprüfung von Rohrleitungen, insbesondere von Abwasserleitungen, durch
a) Füllen von abgesperrten Rohrleitungsabschnitten mit Wasser, das über eine Steigleitung mit einem Freispiegel-Vorratsbehälter verbunden ist, Abwarten einer vorgegebenen Vorfüllzeit, Beaufschlagen des Freispiegels mit einem vorgegebenen Prüfdruck abzüglich des hydrostatischen Drucks zwischen Freispiegel und Rohrleitung und Messen des ggf. auftretenden Wasserverlustes im Freispiegel-Behälter während einer vorgegebenen Prüfzeit,
b) Eingabe der kennzeichnenden Daten des abgesperrten Rohrleitungsabschnitts wie Länge, Innendurchmesser, Rohrbett-Tiefe und Werkstoff in einen Rechner sowie Vergleich des gemessenen Wasserlustes mit einem im Rechner gespeicherten, vorgegebenen Grenzwert für den Wasserverlust, und
c) Erzeugen einer Anzeige und/oder eines Ausdrucks des gemessenen Wasserverlustes im Vergleich zum vorgegebenen Grenzwert.

Ein solches Verfahren, das durch eine Firmendruckschrift der Firma Ostthüringer Entwicklungsgesellschaft mbH Arbeit und Umwelt OTEGAU in Gera "Dichtigkeitsprüfeinrichtung DPE" bekannt ist, eignet sich nur für die Prüfung jeweils eines Rohrleitungabschnitts.

Die Grundzüge des Prüfungsverfahrens sind Gegenstand der Norm DIN 4033.

Der Erfindung liegt die Aufgabe zugrunde, die Dichtheitsprüfung von komplexen Rohrleitungssystemen zu erleichtern und zu vereinfachen, insbesondere aber, die Vorbereitungs- und die Prüfzeiten zu verringern.

Die Lösung der gestellten Aufgabe erfolgt bei dem eingangs angegebenen Verfahren erfindungsgemäß dadurch, daß man bei der Dichtheitsprüfung mehrerer Rohrleitungsabschnitte die ggf. unterschiedlichen kennzeichnenden Daten der einzelnen Rohrleitungsabschnitte in den Rechner eingibt, die Summe aller ggf. auftretenden Wasserverluste im Freispiegel-Behälter mißt und mit der Summe der zu den kennzeichnenden Daten gehörigen Grenzwerte für den Wasserverlust vergleicht und die besagten Summen von Wasserverlusten und Grenzwerten anzeigt und/oder ausdruckt.

Das erfindungsgemäße Verfahren ermöglicht die gleichzeitige Dichtheitsprüfung verzweigter Rohrleitungssysteme, und zwar auch dann, wenn die einzelnen Leitungsabschnitte oder Zweigleitungen unterschiedliche kennzeichnende Daten aufweisen und damit unterschiedlichen Prüfparametern genügen müssen. Es ist dann jedenfalls nur dafür zu sorgen, da der jeweils ungünstigste Fall berücksicht wird. Die Addition von Vorfüllzeiten einerseits und Prüfzeiten andererseits tritt dann nicht mehr auf. Auch wird die Anzahl der Absperrorgane und deren Einbauvorgänge verringert.

Als Rohrleitungsmaterialien kommen beispielhaft infrage:
Asbestzement
Kunststoff
Steinzeug
Stahl
Guß
Hierfür beträgt die Vorfüllzeit nach DIN 4033 eine Stunde.
Ferner:
Beton
Stahlbeton
Mauerwerk
Stahl mit Zementmörtelauskleidung.

Hierfür beträgt die Vorfüllzeit nach DIN 4033 vierundzwanzig Stunden. Für jeden dieser Werkstoffe sind pro Einheit der benetzten Oberfläche bestimmte Grenzwerte für den Wasserverlust vorgegeben.

Es ist dabei besonders vorteilhaft, wenn man den Freispiegel im Freispiegel-Behälter durch einen Füllstandsmesser laufend überwacht und das Meßsignal in den Rechner eingibt. Die Veränderung des Füllstandes läßt sich sehr genau messen; die Veränderung des hydrostatischen Drucks ist vernachlässigbar, wenn der Querschnitt des Freispiegelbehälters hinreichend groß ist. Abgesehen von den Verlusten bei porösen Werkstoffen während der Vorfüllzeiten ist der Wasserverlust während der eigentlichen Prüfzeit, die in der Regel 15 Minuten beträgt, bei intakten Rohrleitungen gering.

Die Erfindung betrifft auch eine Vorrichtung oder Anordnung zur Dichtheitsprüfung von Rohrleitungen, insbesondere von Abwasserleitungen, die durch Absperrorgane in Rohrleitungsabschnitte unterteilt und mit Wasser gefüllt sind und die über eine Steigleitung mit einem Freispiegel-Vorratsbehälter verbunden sind, der zur Erzeugung eines Prüfdrucks mit einer Druckluftquelle, z.B. einer Luftpumpe oder Druckgasflasche, verbunden und mit einer Meßvorrichtung zum Messen des ggf. auftretenden Wasserverlustes im Freispiegel-Behälter während einer vorgegebenen Prüfzeit ausgestattet ist, sowie mit einem Rechner mit
a) einer Eingabevorrichtung zur Eingabe der kennzeichnenden Daten des abgesperrten Rohrleitungsabschnitts wie Länge, Innendurchmesser, Rohrbett-Tiefe und Werkstoff in den Rechner,
b) einem Datenspeicher für mindestens einen vorgegebenen Grenzwert für den Wasserverlust,
c) mit einer Vergleichseinrichtung zum Vergleich des gemessenen Wasserlustes mit dem im Datenspeicher des Rechners gespeicherten, vorgegebenen Grenzwert für den Wasserverlust, und mit
d) einer Anzeigevorrichtung und/oder einer Druckvorrichtung zum Erzeugen einer Anzeige und/oder eines Ausdrucks des gemessenen Wasserverlustes im Vergleich zum vorgegebenen Grenzwert.

Zur Lösung der gleichen Aufgabe ist eine solche Vorrichtung erfindungsgemäß dadurch gekennzeichnet, daß zur Dichtheitsprüfung mehrerer Rohrleitungsabschnitte der Rechner ausgestattet ist mit:
e) mehreren Datenspeichern für die ggf. unterschiedlichen kennzeichnenden Daten der einzelnen Rohrleitungsabschnitte,
f) einem Addierglied für die Bildung der Summe aller vorgegebenen Grenzwerte für die einzelnen Rohrleitungsabschnitte und
g) mit einer Vergleichseinrichtung für den Vergleich der ggf. auftretenden Wasserverluste im Freispiegel-Behälter mit der Summe der zu den kennzeichnenden Daten gehörigen Grenzwerte für den Wasserverlust.

Es ist dabei besonders vorteilhaft, wenn dem Freispiegel im Freispiegel-Behälter ein Füllstandsmesser zugeordnet ist, der dem Rechner aufgeschaltet ist, insbesondere, wenn der Füllstandsmesser ein Ultraschall-Füllstandsmesser ist. Derartige Füllstandsmesser sind mit einer Auflösung von 0,25 mm im Handel.

Es ist weiterhin von Vorteil, wenn:
- der Freispiegel-Behälter einen absperrbaren Überlauf für die Einstellung eines Anfangspegels für den Freispiegel aufweist,
- der Freispiegel-Behälter zusätzlich eine Skala für die visuelle Beobachtung der Lage des Freispiegels aufweist,
- die Vorrichtung ein einachsiges Fahrgestell mit einem senkrechten Rahmen aufweist, auf dessen einer Seite der Freispiegelbehälter und auf dessen anderer Seite ein Aufnahmebehälter für Zubehörteile aus der Gruppe Schläuche, Luftpumpe und Absperrorgane angeordnet ist,
- der Rechner über dem Freispiegel-Behälter abnehmbar am Rahmen angeordnet ist und z.B. während der Vorfüllzeit abgenommen werden kann,
- der Rahmen zwei senkrechte Schenkel aufweist, dessen oben liegendes Joch einen Handgriff bildet, und wenn
- die oberen Enden der Schenkel mit dem Joch über dem Aufnahmebehälter abgewinkelt sind.

Ein Ausführungsbeispiel des Erfindungsgegenstandes und seine Funktionsweise werden nachstehend anhand der Figuren 1 bis 4 näher erläutert.

Es zeigen:
- Figur 1: eine Seitenansicht der Prüfvorrichtung in Verbindung mit zwei Schnitten durch im Erdreich verlegte Rohrleitungen,
- Figur 2: eine Anzeigeeinheit mit aufeinanderfolgenden Anzeigen bei der Einstellung der Prüfvorrichtung,
- Figur 3: die Anzeigeeinheit nach Figur 2 mit aufeinanderfolgenden Anzeigen bei der Prüfung a) eines unverzweigten Rohrsystems (links), und b) eines verzweigten Rohrsystems (rechts), und
- Figur 4: einen Datenausdruck eines Protokolls für eine bestandene Dichtheitsprüfung nach DIN 4033.

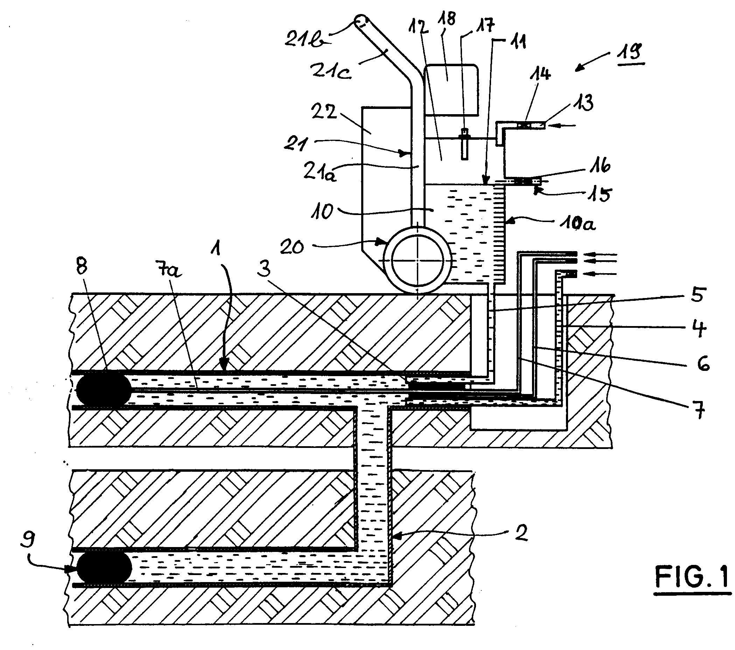

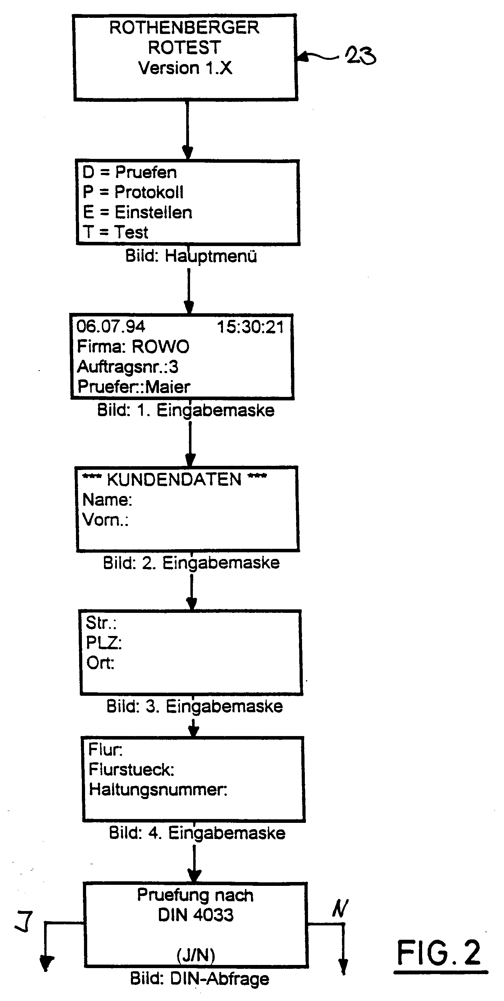

In Figur 1 ist ein Rohrleitungssystem mit zwei Rohrleitungsabschnitten 1 und 2 dargestellt, von denen der Rohrleitungsabschnitt 2 eine Zweigleitung zum Rohrleitungsabschnitt 1 darstellt. Die Rohrleitungen liegen nicht notwendigerweise untereinander, sondern im allgemeinen nebeneinander.

Am Meßende ist das Rohrleitungssystem durch ein Absperrorgan 3 verschlossen, das als aufblasbare Absperrblase ausgebildet und mit Durchführungen für eine Wasserleitung 4 und eine Steigleitung 5 versehen ist. Die Druckluft für das Aufblasen wird durch eine Luftleitung 6 zugeführt. Eine weitere Luftleitung 7, die gleichzeitig als Abstandshalter 7a dient, ist durch das Absperrorgan 3 hindurchgeführt und an ein weiteres analoges Absperrorgan 8 angeschlossen. Die aus Länge und Durchmesser bzw. Umfang berechnete, benetzte Innenoberfläche des zwischen den beiden Absperrorganen 3 und 8 liegenden Rohrleitungsabschnitts 1 ist eines der kennzeichnenden Daten dieses Rohrleitungabschnitts 1.

Der Rohrleitungsabschnitt 2 ist am jenseitigen Ende durch ein weiteres Absperrorgan 9 analoger Beschaffenheit verschlossen. Die Größe der benetzten Oberfläche ist auch hier eines der kennzeichnenden Daten dieses Rohrleitungsabschnitts 2.

Die Steigleitung 5 führt zu einem druckfesten Freispiegel-Behälter 10, der als senkrechter, zylindrischer und durchsichtiger Behälter ausgeführt und mit einer Skala 10a zur visuellen Kontrolle des Inhalts (Wasser) versehen ist. Natürlich kann der Freispiegel-Behälter auch andere Querschnittsformen aufweisen und muß keine Skala besitzen.

Das Wasser steht bis zum Freispiegel 11, über dem sich ein Luftraum 12 befindet, in dem ein Überdruck von 0,5 bar abzüglich des hydrostatischen Drucks bis zum Freispiegel 11 eingestellt werden kann. Die Luftzufuhr erfolgt über eine Luftleitung 13 mit einem Absperrventil 14. Zur Einstellung des Anfangspegels des Freispiegels 11 dient eine Ablaßleitung 15 mit einem Absperrventil 16. Bis zu dieser Stelle reicht auch die Skala 10a. In der oberen Abschlußwand des Freispiegel-Behälters 10 befindet sich ein Füllstandsmesser 17 mit senkrechter Meßrichtung, der als Ultraschall-Füllstandsmesser ausgebildet und an einen Rechner 18 angeschlossen ist.

Es ist zu erkennen, daß der Freispiegel-Behälter 10 die Wasserverluste beider Rohrleitungabschnitte 1 und 2 ausgleichen muß, d.h. es wird automatisch die Summe aller Wasserverluste gebildet und durch den Füllstandmesser 17 erfaßt. Die Ausbildung des Rechners 18 und die Wirkungsweise der Vorrichtung wurden bereits weiter oben beschrieben.

Die eigentliche Meßvorrichtung kann als Meßwagen 19 bezeichnet werden. Dieser weist folgende Besonderheiten auf:
Die Vorrichtung weist ein einachsiges Fahrgestell 20 mit einem senkrechten Rahmen 21 auf, auf dessen einer Seite der Freispiegelbehälter 10 und auf dessen anderer Seite ein Aufnahmebehälter 22 für Zubehörteile aus der Gruppe Schläuche, Luftpumpe und Absperrorgane 3, 8 und 9 angeordnet ist. Der Rechner 18 ist über dem Freispiegel-Behälter 10 am Rahmen 21 angeordnet ist und kann z.B. während der Vorfüllzeit abgenommen und auch mit einem PC verbunden werden. Der Rahmen 21 weist zwei senkrechte Schenkel 21a auf, und sein oben liegendes Joch 21b bildet einen Handgriff. Die oberen Enden 21c der Schenkel 21a sind mit dem Joch 21b über dem Aufnahmebehälter 22 abgewinkelt.

Die Figuren 2 bis 4 sprechen durch ihre Texteinfügungen für sich selbst. Es sei daher hier nur folgendes vermerkt:

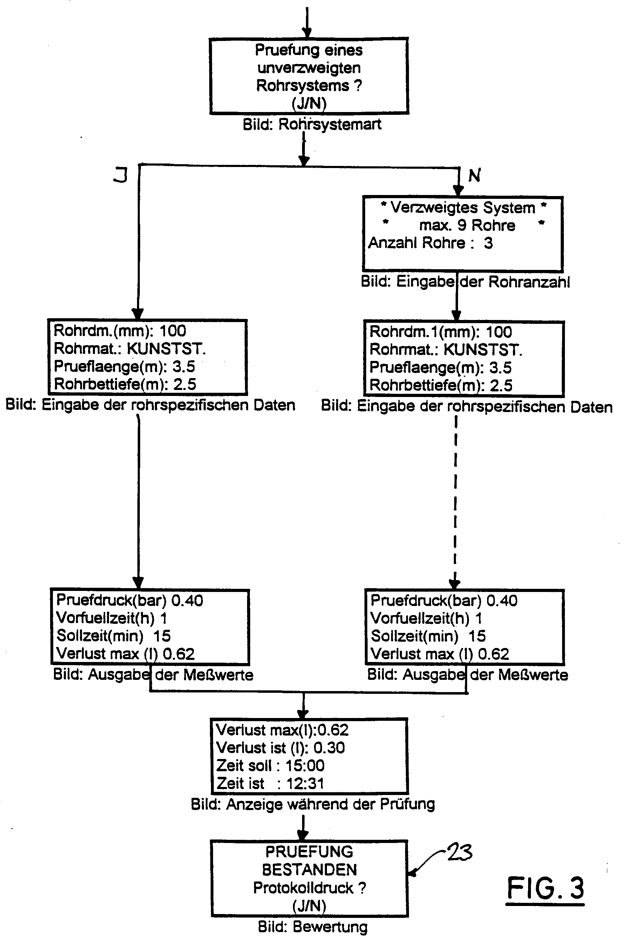

Die Figuren 2 und 3, die aneinandergereiht zu lesen sind, zeigen die Anzeigeeinheit 23 mit einem Teil der verschiedenen möglichen Anzeigen, die nacheinander aufgerufen werden können und sowohl die fest eingespeicherten Werte als auch Eingabebefehle und die eingegebenen Daten enthalten. Die letzte bzw. unterste Anzeige in Figur 2 schafft auch die Möglichkeit, eine andere Prüfung als nach DIN 4033 durchzuführen und beispielsweise auch nur die Istwerte der Wasserverluste anzuzeigen und/oder auszudrucken, d.h. ohne vorgegeben Grenz - oder Vergleichswerte.

Die Figur 3 zeigt anhand der linken Bildfolge, daß es mit der erfindungsgemäßen Vorrichtung natürlich auch möglich ist, ein unverzweigtes Rohrleitungssystem zu prüfen. Der gestrichelte Pfeil im rechten Teil von Figur 3 deutet die Möglichkeit weiterer Anzeigen/Eingaben für Rohrdurchmesser, Rohrmaterial, Prüflänge (zwischen den Absperrorgenen 3, 8 und 9) an. Im vorliegenden Fall kann es sich um bis zu acht Zweigleitungen plus der Hauptleitung handeln.

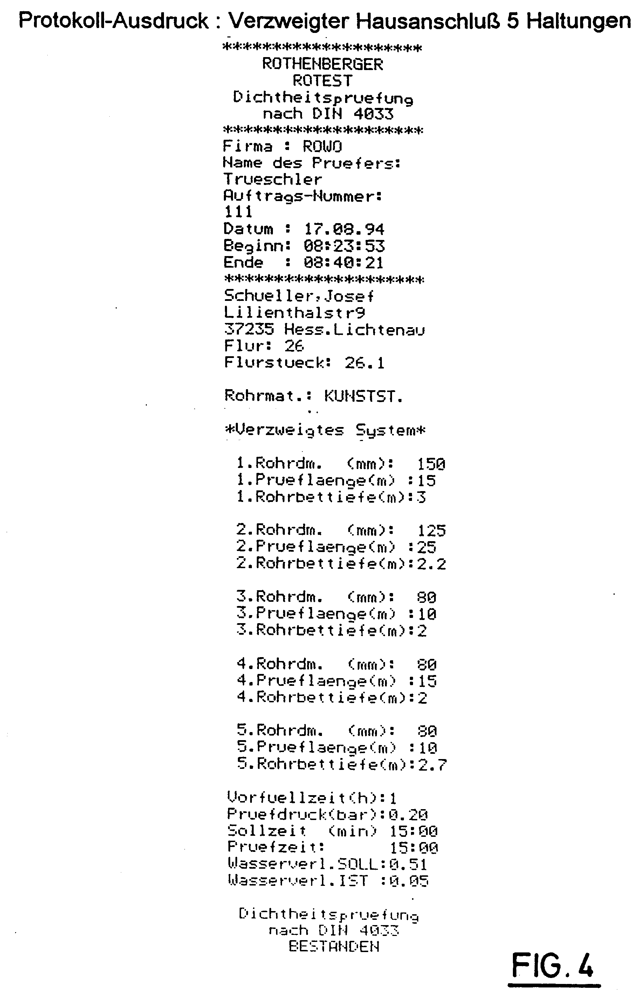

Figur 4 zeigt einen Datenausdruck in Form eines Prüfprotokolls für insgesamt 5 gleichzeitig geprüfte Rohrleitungsabschnitte, wobei auf den Einzelausdruck des Rohrwerkstoffs verzichtet wurde, da in diesem Fall alle Leitungsabschnitte aus Kunststoffrohren bestanden.

Die letzte/untere Anzeige in Figur 3 eröffnet natürlich auch die Möglichkeit, daß die Prüfung nicht bestanden wurde.

## Patentansprüche

1. Verfahren zur Dichtheitsprüfung von Rohrleitungen, insbesondere von Abwasserleitungen, durch
a) Füllen von abgesperrten Rohrleitungsabschnitten (1) mit Wasser, das über eine Steigleitung (5) mit einem Freispiegel-Vorratsbehälter (10) verbunden ist, Abwarten einer vorgegebenen Vorfüllzeit, Beaufschlagen des Freispiegels (11) mit einem vorgegebenen Prüfdruck abzüglich des hydrostatischen Drucks zwischen Freispiegel (11) und Rohrleitung und Messen des ggf. auftretenden Wasserverlustes im Freispiegel-Behälter (10) während einer vorgegebenen Prüfzeit,
b) Eingabe der kennzeichnenden Daten des abgesperrten Rohrleitungsabschnitts (1) wie Länge, Innendurchmesser, Rohrbett-Tiefe und Werkstoff in einen Rechner (18) sowie Vergleich des gemessenen Wasserlustes mit einem im Rechner gespeicherten, vorgegebenen Grenzwert für den Wasserverlust, und
c) Erzeugen einer Anzeige und/oder eines Ausdrucks des gemessenen Wasserverlustes im Vergleich zum vorgegebenen Grenzwert,
**dadurch gekennzeichnet**, daß man bei der Dichtheitsprüfung mehrerer Rohrleitungsabschnitte (1, 2) die ggf. unterschiedlichen kennzeichnenden Daten der einzelnen Rohrleitungsabschnitte (1, 2) in den Rechner (18) eingibt, die Summe aller ggf. auftretenden Wasserverluste im Freispiegel-Behälter (10) mißt und mit der Summe der zu den kennzeichnenden Daten gehörigen Grenzwerte für den Wasserverlust vergleicht und die besagten Summen von Wasserverlusten und Grenzwerten anzeigt und/oder ausdruckt.

2. Verfahren nach Anspruch 1, **dadurch gekennzeichnet**, daß man den Freispiegel (11) im Freispiegel-Behälter (10) durch einen Füllstandsmesser (17) laufend überwacht und das Meßsignal in den Rechner (18) eingibt.

3. Vorrichtung zur Dichtheitsprüfung von Rohrleitungen, insbesondere von Abwasserleitungen, die durch Absperrorgane (3, 8, 9) in Rohrleitungsabschnitte (1, 2) unterteilt und mit Wasser gefüllt sind und die über eine Steigleitung (5) mit einem Freispiegel-Vorratsbehälter (10) verbunden sind, der zur Erzeugung eines Prüfdrucks mit einer Druckluftquelle verbunden und mit einer Meßvorrichtung (17) zum Messen des ggf. auftretenden Wasserverlustes im Freispiegel-Behälter (10) während einer vorgegebenen Prüfzeit ausgestattet ist, sowie mit einem Rechner (18) mit
a) einer Eingabevorrichtung zur Eingabe der kennzeichnenden Daten des abgesperrten Rohrleitungsabschnitts (1, 2) wie Länge, Innendurchmesser, Rohrbett-Tiefe und Werkstoff in den Rechner (18),
b) einem Datenspeicher für mindestens einen vorgegebenen Grenzwert für den Wasserverlust,
c) mit einer Vergleichseinrichtung zum Vergleich des gemessenen Wasserlustes mit dem im Datenspeicher des Rechners gespeicherten, vorgegebenen Grenzwert für den Wasserverlust, und mit
d) einer Anzeigevorrichtung (23) und/oder einer Druckvorrichtung zum Erzeugen einer Anzeige und/oder eines Ausdrucks des gemessenen Wasserverlustes im Vergleich zum vorgegebenen Grenzwert,
**dadurch gekennzeichnet**, daß zur Dichtheitsprüfung mehrerer Rohrleitungsabschnitte (1, 2) der Rechner (18)
e) mit mehreren Datenspeichern für die ggf. unterschiedlichen kennzeichnenden Daten der einzelnen Rohrleitungsabschnitte (1, 2) ausgestattet ist,
f) mit einem Addierglied für die Bildung der Summe aller vorgegebenen Grenzwerte für die einzelnen Rohrleitungsabschnitte und
g) mit einer Vergleichseinrichtung für den Vergleich der ggf. auftretenden Wasserverluste im Freispiegel-Behälter (10) mit der Summe der zu den kennzeichnenden Daten gehörigen Grenzwerte für den Wasserverlust.

4. Vorrichtung nach Anspruch 3, **dadurch gekennzeichnet**, daß dem Freispiegel (11) im Freispiegel-Behälter (10) ein Füllstandsmesser (17) zugeordnet ist der dem Rechner (18) aufgeschaltet ist.

5. Vorrichtung nach Anspruch 4, **dadurch gekennzeichnet**, daß der Füllstandmesser (17) ein Ultraschall-Füllstandsmesser ist.

6. Vorrichtung nach Anspruch 3, **dadurch gekennzeichnet**, daß der Freispiegel-Behälter (10) einen absperrbaren Überlauf (15) für die Einstellung eines Anfangspegels für den Freispiegel (11) aufweist.

7. Vorrichtung nach Anspruch 3**, dadurch gekennzeichnet**, daß der Freispiegel-Behälter (10) eine Skala (10a) für die Lage des Freispiegels (11) aufweist.

8. Vorrichtung nach Anspruch 3, **gekennzeichnet durch** ein einachsiges Fahrgestell (20) mit einem senkrechten Rahmen (21), auf dessen einer Seite der Freispiegelbehälter (10) und auf dessen anderer Seite ein Aufnahmebehälter (22) für Zubehörteile aus der Gruppe Schläuche, Luftpumpe und Absperrorganbe (3, 8, 9) angeordnet ist.

9. Vorrichtung nach Anspruch 8, **dadurch gekennzeichnet**, daß der Rechner (18) über dem Freispiegel-Behälter (10) am Rahmen (21) angeordnet ist.

10. Vorrichtung nach Anspruch 8, **dadurch gekennzeichnet**, daß der Rahmen (21) zwei senkrechte Schenkel (21a) aufweist, dessen oben liegendes Joch (21b) einen Handgriff bildet.

11. Vorrichtung nach Anspruch 10, **dadurch gekennzeichnet**, daß die oberen Enden (21c) der Schenkel (21a) mit dem Joch (21b) über dem Aufnahmebehälter (22) abgewinkelt sind.
